# EUROPEAN PATENT APPLICATION

(11) **EP 2 835 772 A1**
(43) Date of publication of application: **11.02.2015**
(21) Application number: 13275264.3
(22) Date of filing: 29.10.2013
(51) Int. Cl.: G06Q 10/08

(54) **Electronic shelf label, system for electronic shelf label and method of operating system for electronic shelf label**

(30) Priority: 05.08.2013 KR 20130092559
(71) Applicant: Samsung Electro-Mechanics Co., Ltd., Gyeonggi-do (KR)
(72) Inventor: Cho, Han Jin, 443-743 Gyeonggi-do (KR); Lee, Tae Ha, 443-743 Gyeonggi-do (KR); Kim, Wan Su, 443-743 Gyeonggi-do (KR); Yoon, Dong Sik, 443-743 Gyeonggi-do (KR)
(74) Representative: Powell, Timothy John

(57) **Abstract**

The present invention relates to an ESL, a system for an ESL, and a method of operating a system for an ESL, which includes a first communication unit for receiving a first radio frequency signal having lower power than the second radio frequency signal and outputting a pattern signal generated by patterning the first radio frequency signal; a second communication unit for receiving the second radio frequency signal; a control module for controlling the ESL to perform a predetermined specific operation by receiving the pattern signal; and a display unit for displaying a screen according to the control of the control module, and provides an useful effect that only a specific target, which requires forced wake-up, selectively wakes up and furthermore performs predetermined operations.

## Description

### CROSS-REFERENCE TO RELATED APPLICATIONS

Claim and incorporate by reference domestic priority application and foreign priority application as follows:

### "CROSS REFERENCE TO RELATED APPLICATION

This application claims the benefit of Korean Patent Application Serial No. 10-2013-0092559, entitled filed August 5, 2013, which is hereby incorporated by reference in its entirety into this application."

### BACKGROUND OF THE INVENTION

### 1. Field of the Invention

The present invention relates to an electronic shelf label, a system for an electronic shelf label, and a method of operating a system for an electronic shelf label.

### 2. Description of the Related Art

Labels, which display product information and price, are used to display and sell a significant number of products in certain areas such as retail stores.

In general, price labels are attached near the corresponding products on display by directly writing product information necessary for sale, for example, price and discount information on paper by hand or printing the product information on paper according to the standardized format.

The conventional method as above seems to be simple and convenient and implemented at low cost, but the existing paper label application method has limitations in the areas, such as large retail stores, in which the standardized formats are used for tens of thousands of product items and product fluctuation occurs at any time.

That is, when the price fluctuation of some of the numerous product items occurs, it is needed to correct and change the labels in the location of the corresponding products displayed in the retail stores after picking out the corresponding labels and manually writing or printing the product information such as the changed prices.

Therefore, whenever the price information of the products is changed, the time and workforce for the correction and change are needed and the need for improvement of this is on the rise due to the properties of the large retail stores.

That is, there is a need to develop a means for changing product information rapidly, accurately, and simply at minimum costs.

In recent times, in order to satisfy the needs of the market, there are attempts to replace the existing paper label with an electronic tag using an electronic device, and related technologies are disclosed in many documents such as Patent Document 1 and Patent Document 2.

According to the language/cultural differences of organizations and countries in which the related technologies have been developed, various terms such as an electronic shelf label (ESL), an electronic price label (EPL), and an electronic information label (EIL) are used, but it is due to the cultural/language differences in recognizing and describing the label and the electronic tag and thus there is not much difference in the purpose and use thereof.

Hereinafter, in the present invention, it will be referred to as "electronic tag" in Korean and "ESL" in English.

Meanwhile, a communication module is provided in the ESL to transceive data in a wireless communication manner, and a display module such as E-paper or a liquid crystal display (LCD) is provided to display the received data on a screen.

At this time, it is common that a battery is employed to drive the display module etc. and there are continuous efforts to reduce battery consumption since the capacity of the battery is limited.

As a representative method of reducing battery consumption, a technique of alternately performing an active mode and a sleep mode has been widely used. Here, generally, conversion of the ESL from sleep mode to active mode is referred to as wake-up, and most of the ESLs repeat wake-up and sleep periodically.

Accordingly, the smaller the frequency of wake-up, the lower the battery consumption, but it takes a long time to reflect data transmitted from a server or a gateway to the corresponding ESL.

Further, in the process of operating a system for an ESL, there may be situations in which immediate operations of the ESL such as information change, state checking, and real-time price change reflection of the ESL are needed.

However, the ESL in sleep mode cannot perform the above tasks, and the efficiency of operation of the system for an ESL is remarkably reduced when the ESL waits until wake-up according to the preset period.

Because of this, various methods of forcedly waking up an ESL in sleep mode have been proposed. Among them, a representative method is a method of waking up an ESL by transmitting a low-frequency radio signal or waking up an ESL using a magnetic field.

However, the method of forcedly waking up an ESL using a low-frequency radio signal needs a large antenna compared to the case of using a general radio signal, thus disturbing miniaturization and slimming of the ESL.

Further, the method of using a magnetic field has problems such as too short reaction distance, high manufacturing costs, and increase in power consumption when employing a Hall sensor etc.

Further, when the ESL detects a low-frequency radio signal or a magnetic field, the ESL often wakes up unintentionally and thus consumes power even when it doesn't want to wake up itself.

Meanwhile, the ESL needs to perform a predetermined operation so that a store manager can check and manage state or information of the corresponding ESL, but the above-described conventional methods just wake up the ESL forcedly but cannot control the ESL to perform the required predetermined operation.

### [Related Art Document]

### [Patent Document]

Patent Document 1: U.S. Patent Publication No. 2010-0205000
Patent Document 2: U.S. Patent Publication No. 2010-0106588

### SUMMARY OF THE INVENTION

The present invention has been invented in order to overcome the above-described problems and it is, therefore, an object of the present invention to provide an electronic shelf label (ESL) that can selectively wake up only a specific target, which requires forced wake-up, to perform predetermined operations.

Further, it is another object of the present invention to provide a system for an ESL that can selectively wake up only a specific target, which requires forced wake-up, to perform predetermined operations.

Further, it is still another object of the present invention to provide a method of operating a system for an ESL that can selectively wake up only a specific target, which requires forced wake-up, to perform predetermined operations.

In accordance with one aspect of the present invention to achieve the object, there is provided an ESL that transceives a second radio frequency signal with a gateway, including: a first communication unit for receiving a first radio frequency signal having lower power than the second radio frequency signal and outputting a pattern signal generated by patterning the first radio frequency signal; a second communication unit for receiving the second radio frequency signal; a control module for controlling the ESL to perform a predetermined specific operation by receiving the pattern signal; and a display unit for displaying a screen according to the control of the control module.

At this time, the predetermined specific operation may be at least one selected from a wake-up operation of converting the ESL from sleep mode to active mode; a first specific operation of displaying at least one of information held by the ESL by the display unit; and a second specific operation of transmitting at least one of the information held by the ESL through the second communication unit.

Further, the first communication unit may include a first antenna for receiving the first radio frequency signal; a rectification unit connected to the first antenna and rectifying the first radio frequency signal; and a detector unit connected to the rectification unit and generating the pattern signal by patterning the signal rectified by the rectification unit to a square wave, wherein it is preferred that the rectification unit is implemented only with passive devices.

Further, the control module may include a first block maintaining an active state when the ESL is in active mode and in sleep mode; and a second block activated only when the ESL is in the active mode.

At this time, the first block may include a first register for recording first pattern data matched with the wake-up operation of converting the ESL from the sleep mode to the active mode; a second register for recording pattern data generated by converting the pattern signal output from the first communication unit; and a third register for recording a pattern data which is recorded in the second resister and different from the first pattern data.

Further, the first block may further include a control unit for recording the first pattern data in the first register, comparing the pattern data recorded in the second register with the first pattern data, and transmitting an interrupt signal to the second block when the pattern data recorded in the second register is the first pattern data.

Further, the second block may read the pattern data recorded in the third register and perform a specific operation of the specific operations, which matches with the read pattern data, when the interrupt signal is applied.

Further, the ESL may further include a storage unit including a pattern data storage for storing the pattern data; and a process information storage for storing process information which is information about the specific operation, wherein the respective pattern data and the respective process information are stored to match with each other.

Meanwhile, the information held by the ESL may be at least one selected from MAC address, the number of abnormal operations, and battery voltage information of the ESL, and ambient temperature of the ESL.

Further, it is preferred that the first pattern data are unique values different in the respective ESLs.

In accordance with another aspect of the present invention to achieve the object, there is provided a system for an ESL including an ESL, a gateway, a server, and a mobile terminal that outputs a first radio frequency signal, wherein a predetermined specific operation includes an assign operation of registering the ESL in the system for an ESL or an unassign operation of releasing registration of the ESL in the system for an ESL.

At this time, it is preferred that the ESLs are provided in plural number and the respective ESLs have first pattern data as different unique values.

In accordance with still another aspect of the present invention to achieve the object, there is provided a method of operating a system for an ESL including an ESL, a gateway, a server, and a mobile terminal that outputs a first radio frequency signal, including the steps of: recording first pattern data in a first register; receiving the first radio frequency signal and performing a specific operation according to pattern data included in the received first radio frequency signal by the ESL when the mobile terminal outputs the first radio frequency signal; and converting the ESL to sleep mode.

At this time, the step of receiving the first radio frequency signal and performing the specific operation according to the pattern data included in the received first radio frequency signal by the ESL may include the steps of recording pattern data in a second register; determining whether the pattern data recorded in the first register is equal to the pattern data recorded in the second register; transmitting an interrupt signal from a first block to a second block when the pattern data recorded in the first register is equal to the pattern data recorded in the second register; reading pattern data recorded in a third register by the second block; searching process information matched with the pattern data recorded in the third register; and performing a normal operation when there is no process information matched with the pattern data recorded in the third register.

Further, the pattern data recorded in the second register may be copied to the third register when the pattern data recorded in the first register is not equal to the pattern data recorded in the second register.

Further, a specific operation according to the process information matched with the pattern data recorded in the third register may be performed when there is the process information matched with the pattern data recorded in the third register.

Meanwhile, the step of receiving the first radio frequency signal and performing the specific operation according to the pattern data included in the received first radio frequency signal may include the steps of recording pattern data in a second register; determining whether the pattern data recorded in the first register is equal to the pattern data recorded in the second register; and transmitting an interrupt signal from a first block to a second block when the pattern data recorded in the first register is equal to the pattern data recorded in the second register, wherein the second block wakes up when receiving the interrupt signal.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a view schematically showing a system for an ESL in accordance with an embodiment of the present invention;

FIG. 2 is a view for explaining operation of the system for an ESL in accordance with an embodiment of the present invention;

FIG. 3 is a view schematically showing an ESL in accordance with an embodiment of the present invention;

FIG. 4 is a view for explaining a first radio frequency signal and a second radio frequency signal transceived by the ESL in accordance with an embodiment of the present invention, wherein FIG. 4a is a view showing the first radio frequency signal, and FIG. 4b is a view showing the second radio frequency signal;

FIG. 5 is a block diagram schematically showing configuration of a control module of the ESL in accordance with an embodiment of the present invention;

FIG. 6 is a view for explaining the relationship between signals and data processed by the ESL in accordance with an embodiment of the present invention; and

FIG. 7 is a flowchart schematically showing a method of operating a system for an ESL in accordance with an embodiment of the present invention.

### DETAILED DESCRIPTION OF THE PREFERABLE EMBODIMENTS

Advantages and features of the present invention and methods of accomplishing the same will be apparent by referring to embodiments described below in detail in connection with the accompanying drawings. However, the present invention is not limited to the embodiments disclosed below and may be implemented in various different forms. The embodiments are provided only for completing the disclosure of the present invention and for fully representing the scope of the present invention to those skilled in the art. Like reference numerals refer to like elements throughout the specification.

Terms used herein are provided to explain embodiments, not limiting the present invention. Throughout this specification, the singular form includes the plural form unless the context clearly indicates otherwise. When terms "comprises" and/or "comprising" used herein do not preclude existence and addition of another component, step, operation and/or device, in addition to the above-mentioned component, step, operation and/or device.

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Similarly, if a method is described herein as comprising a series of steps, the order of such steps as presented herein is not necessarily the only order in which such steps may be performed, and certain of the stated steps may possibly be omitted and/or certain other steps not described herein may possibly be added to the method.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical or non-electrical manner. Objects described herein as being "adjacent to" each other may be in physical contact with each other, in close proximity to each other, or in the same general region or area as each other, as appropriate for the context in which the phrase is used. Occurrences of the phrase "in one embodiment" herein do not necessarily all refer to the same embodiment.

Hereinafter, configurations and operational effects of the present invention will be described in detail with reference to the accompanying drawings.

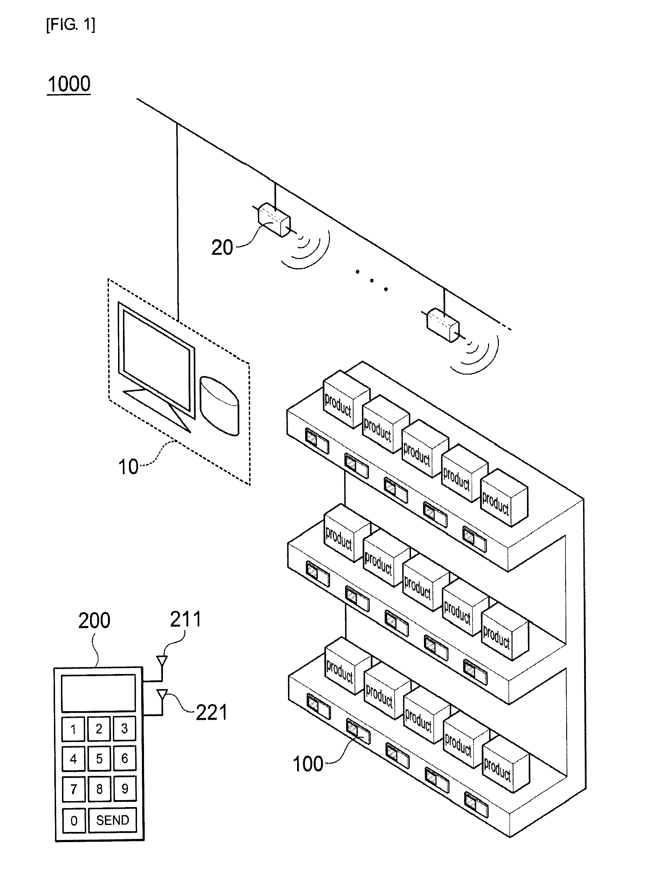

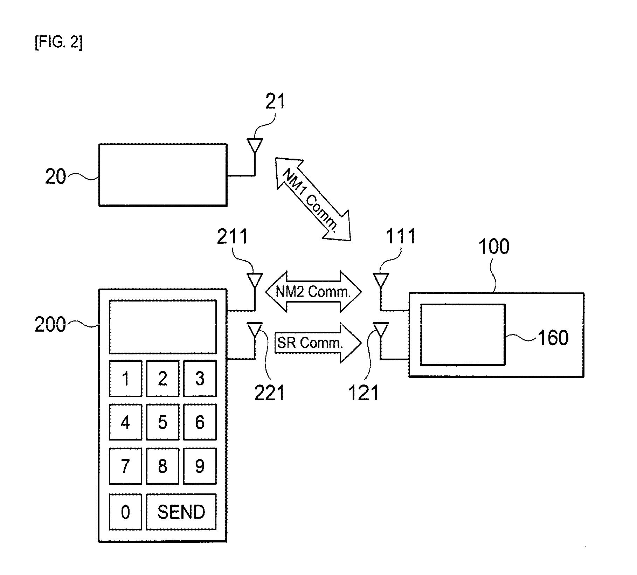

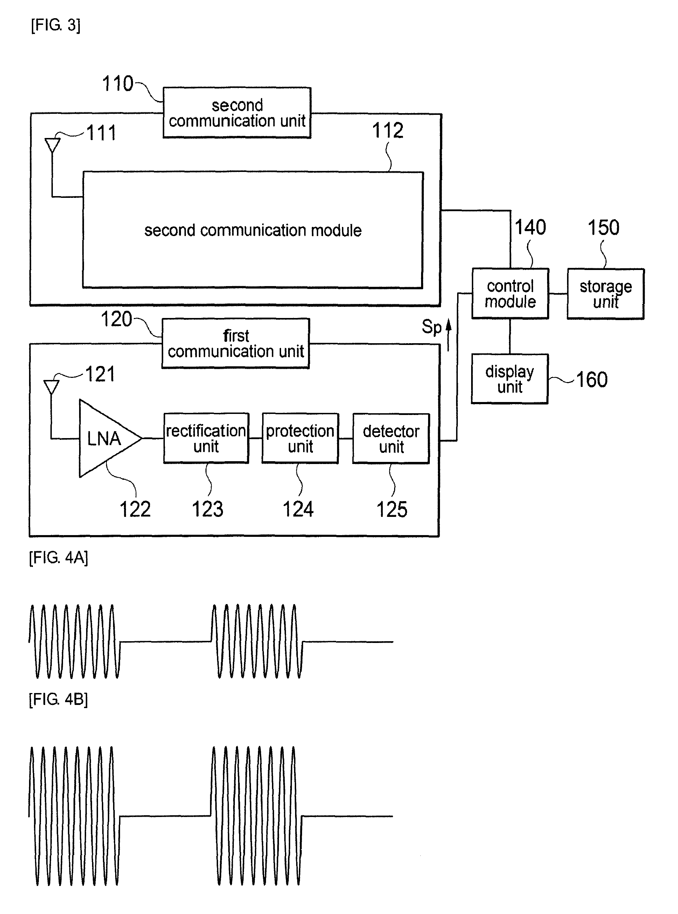

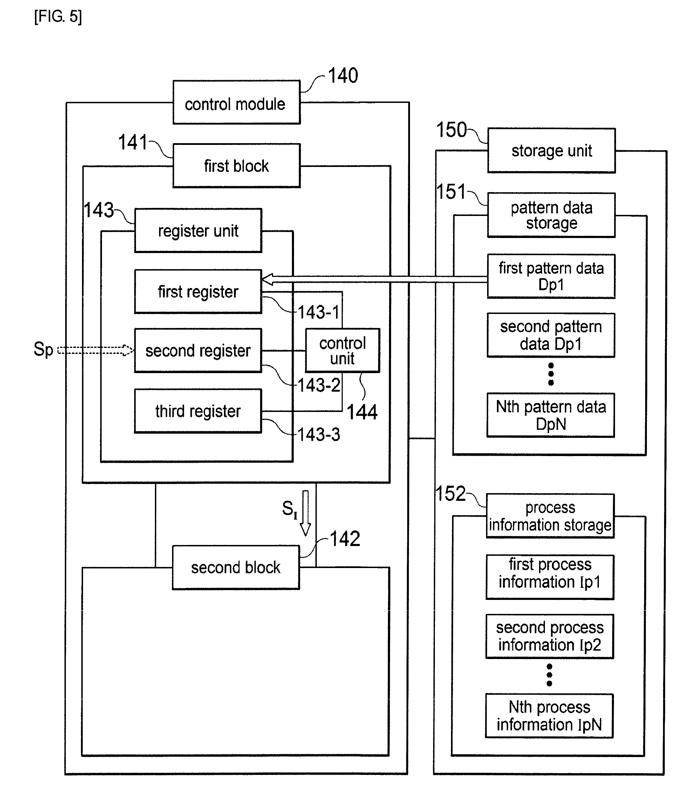

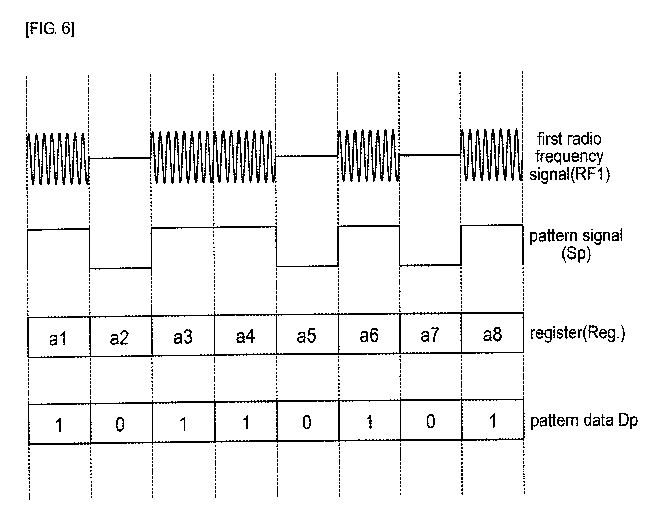

FIG. 1 is a view schematically showing a system 1000 for an ESL in accordance with an embodiment of the present invention, FIG. 2 is a view for explaining operation of the system 1000 for an ESL in accordance with an embodiment of the present invention, FIG. 3 is a view schematically showing an ESL 100 in accordance with an embodiment of the present invention, FIG. 4 is a view for explaining a first radio frequency signal RF1 and a second radio frequency signal transceived by the ESL 100 in accordance with an embodiment of the present invention, wherein FIG. 4a is a view showing the first radio frequency signal RF1, and FIG. 4b is a view showing the second radio frequency signal, FIG. 5 is a block diagram schematically showing configuration of a control module 140 of the ESL 100 in accordance with an embodiment of the present invention, and FIG. 6 is a view for explaining the relationship between signals and data processed by the ESL 100 in accordance with an embodiment of the present invention.

Referring to FIGS. 1 to 6, a system 1000 for an electronic shelf label (ESL) in accordance with an embodiment of the present invention may include a server 10, a gateway 20, an ESL 100, and a mobile terminal 200.

Generally, the server 10 is constructed based on a wired communication network such as a TCP/IP network, and the ESL 100 is connected to a network mainly in a wireless communication manner.

Therefore, a means of relaying a wired communication network and a wireless communication network and converting data is needed, and the gateway 20 can play a role of the above means.

The server 10 may store product information such as product name and price, which are to be displayed by the ESL 100, various events such as temporary discount, and identification information of the ESLs 100. However, the product information and the events may be stored in a separate legacy system (not shown) connected to the server 10 and transmitted to the server 10 or input to the server 10 by a store manager through a separate input means connected to the server 10.

The server 10 configured as above may perform a function of converting the information, which are to be displayed by the ESL 100 disposed on shelves in the store, into data and providing the data to the ESL 100 through the gateway 20.

Next, the ESL 100 may perform a function of receiving and displaying the data transmitted from the server 10 through the gateway 20.

At this time, the ESL 100 and the gateway 20 may exchange data by transceiving a second radio frequency signal. The second radio frequency signal and the fact that the ESL 100 outputs a predetermined screen or transmits predetermined information to the gateway 20 by transceiving the second radio frequency signal are substantially the same as the case of a conventional typical system for an ESL.

Meanwhile, the ESL 100 in accordance with an embodiment of the present invention may be forced to wake up by receiving a first radio frequency signal RF1 transmitted from the mobile terminal 200.

Further, the information held by the ESL 100, such as MAC address, the number of abnormal operations, and battery voltage information of the ESL 100 and ambient temperature of the ESL 100 may be displayed on a display unit 160 or transmitted to the mobile terminal 200 or the gateway 20. In the present specification, these operations of the ESL 100 will be referred to as "specific operations". Further, the specific operation is a concept including wake-up.

As shown in FIG. 2, a first antenna unit 221 of the mobile terminal 200 may transmit the first radio frequency signal RF1, and a first antenna 121 of the ESL 100 may receive the first radio frequency signal RF1.

Further, the ESL 100 may perform wake-up and specific operations using pattern data Dp included in the received first radio frequency signal RF1. Among the specific operations, a communication process of transmitting the information held by the ESL 100 to a relay antenna 21 of the gateway 20 is represented by NM1 Comm. and a communication process of transmitting the information held by the ESL 100 to the mobile terminal 200 is represented by NM2 Comm. Here, NM means a normal mode and is used to represent a method of transceiving data using the second radio frequency signal.

Meanwhile, looking into the difference between the first radio frequency signal RF1 and the second radio frequency signal with reference to FIGS. 4a and 4b, it will be understood that the first radio frequency signal RF1 has lower power than the second radio frequency signal.

That is, the second radio frequency signal is used to transceive data between the gateway 20 and the ESL 100 and typically has power over a certain reference value to allow one gateway 20 to normally transceive data with a plurality of ESLs 100 positioned within a predetermined radius.

On the other hand, since the first radio frequency signal RF1 is a radio frequency signal transmitted from the mobile terminal 200 and used to manage the specific ESL 100 among the ESLs 100 installed in the store by the manager etc, only the ESL 100 to be managed needs to receive the first radio frequency signal RF1. Therefore, since the mobile terminal 200 just needs to transmit the first radio frequency signal RF1 in the state close to the corresponding ESL 100, the radio frequency signal doesn't need to have high power.

In addition, if the power of the first radio frequency signal RF1 is high, the ESL 100 positioned around the ESL 100 as a management target also has much possibility of receiving the first radio frequency signal RF1, thus causing a problem that the ESL 100, which is not the management target, processes the first radio frequency signal RF1 unnecessarily.

As will be described later, the ESL 100 in accordance with an embodiment of the present invention may not wake up in spite of reception of the first radio frequency signal RF1 when it is not the management target. Nevertheless, since a process of checking the first radio frequency signal RF1 will be performed, it is preferred that the ESLs 100, which are not the management targets, are prevented from receiving the first radio frequency signal RF1, if possible.

For this, in the system 1000 for an ESL in accordance with an embodiment of the present invention, the power of the first radio frequency signal RF1 is low. Particularly, it is preferred that the first radio frequency signal has power that enables normal data communication only within a distance of about 20cm.

Referring to FIG. 2 again, data may be transceived between a second antenna 111 of the ESL 100 and a second antenna unit 211 of the mobile terminal 200 through the second radio frequency signal. That is, it is the same as the wireless communication method between the gateway 20 and the second antenna 111 of the ESL 100. By reflecting this, the wireless communication between the second antenna 111 of the ESL 100 and the second antenna unit 211 of the mobile terminal 200 is represented by NM2 Comm.

Referring to FIG. 3, the ESL 100 may include a first communication unit 120, a second communication unit 110, a control module 140, a storage unit 150, and a display unit 160.

The first communication unit 120 performs a function of receiving the first radio frequency signal RF1, and the second communication unit 110 performs a function of transceiving the second radio frequency signal. The second communication unit 120 may be implemented equally to a typical ESL 100.

The first communication unit 120 may include a first antenna 121, a rectification unit 123, and a detector unit 125 and additionally further include a low-noise amplifier 122 or a protection unit 124.

First, the first antenna 121, which receives the first radio frequency signal RF1, may be implemented with a typical antenna. At this time, since the frequency of the first radio frequency signal RF1 doesn't need to be low, there is no need to increase the size of the antenna compared to the conventional case of implementing a forced wake-up with a low-frequency radio signal.

Next, the rectification unit 123 performs a function of rectifying the first radio frequency signal RF1, which is an AC signal, to convert the first radio frequency signal to a linear analog signal. At this time, the rectification unit 123 may be implemented with a plurality of passive devices such as capacitors and diodes to rectify the first radio frequency signal RF1 without separate power consumption.

The signal, which is rectified to the linear analog signal, is patterned to a square wave by the detector unit 125 to be output as a pattern signal Sp. At this time, the detector unit 125 may be implemented with a plurality of transistors to which a bias voltage is applied.

Meanwhile, since the transistor may be damaged when a too high voltage is applied to the detector unit 125, it is needed to limit the signal output from the rectification unit 123 to below a certain level, and the protection unit 124 may be further provided to limit the signal output from the rectification unit 123 to below a predetermined reference value like this.

Further, the low-noise amplifier 122 may be further provided between the first antenna 121 and the rectification unit 123 when necessary.

When the low-noise amplifier 122 is provided, the low-noise amplifier 122 can amplify the first radio frequency signal RF1 to convert the first radio frequency signal RF1 to the pattern signal Sp even when the power of the first radio frequency signal RF1 is relatively low.

Accordingly, a command to perform a specific operation such as wake-up can be transmitted between the mobile terminal 200 and the ESL 100 using the first radio frequency signal RF1. As a result, the system 1000 for an ESL in accordance with an embodiment of the present invention can be used even when the ESLs 100 are disposed far away from the product store and the manager uses the mobile terminal 200 in the position far away from the ESL 100. For example, the system 1000 for an ESL in accordance with an embodiment of the present invention can be used in warehouses or parking lots in which the ESLs 100 are provided to be used.

Referring to FIG. 5, the control block 140 may consist of a first block 141 and a second block 142.

At this time, the first block 141 maintains an active state in all states in which power is maintained, and the second block 142 is activated only when the ESL 100 is in active mode.

As described above, the ESL 100 repeats sleep and wake-up periodically to reduce power consumption. At this time, the second block 142 is activated to perform various functions only when the ESL 100 is woken up. On the other hand, the first block 141 always maintains an active state regardless of the state of the ESL 100 and processes the pattern signal Sp included in the first radio frequency signal RF1 to activate the second block 142 or helps the second block 142 to perform a specific operation.

More specifically, the first block 141 may include a control unit 144 and a register unit 143 in which the pattern data Dp is recorded.

Meanwhile, referring to FIG. 6, it will be able to understand the relationship between the first radio frequency signal RF1, the pattern signal Sp, the register, and the pattern data Dp.

That is, when the first radio frequency signal RF1 has a waveform shown in FIG. 6, the above-described first communication unit 120 outputs the pattern signal Sp by processing the first radio frequency signal RF1 to pattern the first radio frequency signal RF1 to a square wave. The pattern signal Sp output like this is digitized in the first block to be the pattern data Dp. For example, when the pattern signal Sp is high H, the pattern signal Sp may be digitized to 1, and when the pattern signal Sp is low L, the pattern signal Sp may be digitized to 0. The pattern data Dp digitized like this may be recorded in a second register 143-2.

Further, the pattern data Dp may have various combinations according to the number of patterns.

That is, when the number of the patterns is 4, total 16 kinds of different pattern data Dp can be represented according to the combination of the patterns. Therefore, 16 kinds of different specific operations can be performed according to the respective pattern data Dp.

FIG 6 shows an example in which the pattern data Dp consists of 8 bits. In this case, 256 different pattern data Dp, which is 2 to the power of 8, can be combined. However, it is only an example for explanation and doesn't limit the number of the patterns.

Referring to FIG. 5 again, the register unit 143 may include a first register 143-1, a second register 143-2, and a third register 143-3.

The first pattern data Dp1 is recorded in the first register 143-1, the pattern signal Sp, which is received from the detector unit 125 and converted to the pattern data Dp, is recorded in the second register 143-2, and the pattern data Dp, which is recorded in the second register 143-2, is copied to the third register 143-3. At this time, when the pattern data Dp recorded in the second register 143-2 is equal to the first pattern data Dp1, the pattern data Dp is not copied to the third register 143-3. That is, only the pattern data Dp1, which is different from the first pattern data Dp1, can be copied to the third register 143-3.

Further, the storage unit 150 may have a pattern data storage 151 and a process information storage 152. Here, the pattern data storage 151 may store a plurality of pattern data Dp, and as described above, the respective pattern data Dp may have various combinations according to the number of the patterns.

That is, the pattern data storage 151 may store the first to Nth pattern data Dp1 to DpN, and the respective pattern data Dp may match with various specific operations.

Here, information about the specific operation may be converted to process information Ip and stored in the process information storage. That is, the process information storage 152 may store the first to Nth process information Ip1 to IpN. The first process information Ip1 may match with the first pattern data Dp1, and the Nth process information IpN may match with the Nth pattern data DpN.

For example, the first pattern data Dp1 may match with a wake-up operation of the specific operations, and the specific operation according to the first process information Ip1 matched with the first pattern data Dp1 on the system is a wake-up operation.

Further, the second process information Ip2 may correspond to the specific operation of outputting the MAC address of the ESL 100 to the screen, the third process information Ip3 may correspond to the specific operation of transmitting the MAC address of the ESL 100 to the mobile terminal 200, and the fourth process information Ip4 may correspond to the specific operation of transmitting the MAC address of the ESL 100 to the gateway 20.

Accordingly, the ESL 100 can perform the specific operation matched with the pattern data Dp when recognizing the pattern data Dp which is obtained by converting the pattern signal Sp output from the first communication unit 120 to data.

Meanwhile, since the first process information Ip1 may match with the wake-up operation of the specific operations and thus the first pattern data Dp1 stored in the first register 143-1 matches with the first process information Ip1, if the pattern data Dp, which is obtained by converting the pattern signal Sp output from the first communication unit 120 to data, is equal to the first pattern data Dp1, the ESL 100 can wake up.

At this time, the pattern data Dp, which is obtained by converting the pattern signal Sp output from the first communication unit 120 to data, is recorded in the second register 143-2 as described above and compared with the first pattern data Dp1 recorded in the first register 143-1.

And when the pattern data Dp recorded in the second register 143-2 is the first pattern data Dpi recorded in the first register 143-1, an interrupt signal Sₗ is transmitted to the second block 142. Here, the interrupt signal Sₗ may be a signal that activates the second block 142 to read the third register 143-3.

That is, the second block 142 maintains a sleep state together in a state in which the ESL 100 is in sleep mode. As the interrupt signal Sₗ is applied, the second block 142 can be activated and the ELS also can be in active mode.

Further, the interrupt signal Sₗ may be a signal that allows the second block 142 to read the third register 143-3.

For example, when there is no pattern data Dp recorded in the third register 143-3, the second block 142 and the ESL 100 may be preset to perform a normal operation in active mode.

Accordingly, when the pattern data Dp is not detected as a result of reading the third register 143-3 by the second block 142 receiving the interrupt signal Sₗ, the second block 142 performs a normal operation.

Further, it may be set to record the first pattern data Dp1 also in the third register 143-3 in the process of recording the first pattern data Dp1 in the first register 143-1.

As described above, since the first pattern data Dp1 matches with the specific operation, that is, wake-up, the second block 142 wakes up and performs a normal operation after wake-up when the first pattern data Dp1 is checked as a result of reading the third register 143-3 by the second block 142 according to the interrupt signal Sₗ.

Meanwhile, when the pattern data Dp recorded in the second register 143-2 is not the first pattern data Dp1, the pattern data Dp recorded in the second register 143-2 is copied to the third register 143-3.

In this state, new pattern data Dp may be recorded in the second register 143-2 by the subsequent first radio frequency signal RF1. If the new pattern data Dp is equal to the first pattern data Dp1, the interrupt signal Sₗ is applied to the second block 142. And the second block 142, which received the interrupt signal Sₗ, reads the third register 143-3 and performs the specific operation by drawing the process information Ip matched with the pattern data Dp recorded in the third register 143-3.

For example, if the pattern data Dp recorded in the third register 143-3 is the third pattern data Dp and the third processing information Ip matched with the third pattern data Dp corresponds to the specific operation of transmitting the MAC address of the ESL 100 to the mobile terminal 200, the corresponding ESL 100 can perform the specific operation of transmitting its own MAC address to the mobile terminal 200 through NM2 Comm.

Accordingly, if the manager wants to know the MAC address of one ESL 100 using the mobile terminal 200, the manager just has to transmit the first radio frequency signal including the first pattern data Dp1 after transmitting the first radio frequency signal RF1 including the third pattern data Dp3 by operating the mobile terminal 200.

That is, the manager can control the predetermined ESL 100 to perform the specific operation using the mobile terminal 200.

Meanwhile, the control unit 144 may perform functions of controlling the register unit 143, recording the pattern data Dp in the register unit 143, and transmitting the interrupt signal Sₗ to the second block 142.

Then again, the first pattern data Dp1 may be set to different values for the respective ESLs 100. For example, if the first pattern data Dp1 of one ESL 100 is [1000001], the first pattern data Dp1 of another ESL 100 may be [100000010].

Accordingly, even though the first radio frequency signal RF1 is transmitted to the adjacent ESLs 100 at the same time, only the originally aimed ESL 100 wakes up to perform a specific operation or a normal operation. As a result, it is possible to prevent the unnecessary forced wake-up of the ESL and advantageous to reduction of power consumption.

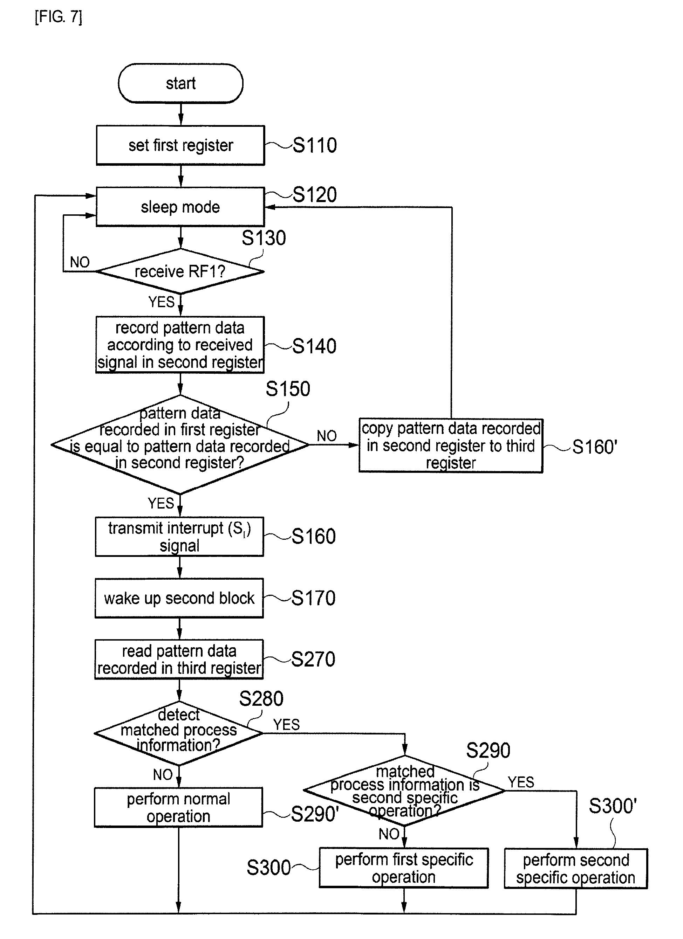

FIG. 7 is a flowchart schematically showing a method of operating a system for an ESL in accordance with an embodiment of the present invention.

Referring to FIGS. 1 to 7, the method of operating a system for an ESL in accordance with an embodiment of the present invention may include the steps of setting by recording first pattern data Dp in a first register 143-1 (S110) and performing a specific operation according to the pattern data Dp included in a first radio frequency signal RF1 by an ESL 100 (S300, S300').

Specifically, first, pattern data Dp is recorded in a second register 143-2 (S140), and it is determined whether the pattern data Dp recorded in the first register 143-1 is equal to the pattern data Dp recorded in the second register 143-2 (S150).

At this time, when the pattern data Dp recorded in the first register 143-1 is equal to the pattern data Dp recorded in the second register 143-2, an interrupt signal Sₗ is transmitted from a first block 141 to a second block 142 (S160). Here, if the second block 142 is in a sleep state, the second block 142 may wake up when receiving the interrupt signal Sₗ (S170).

Next, the second block 142 reads the pattern data Dp recorded in a third register 143-3 (S270). At this time, the second block 142 also searches process information Ip matched with the pattern data Dp recorded in the third register 143-3.

Continuously, a normal operation is performed when the process information Ip are not detected as a result of searching (S290').

On the contrary, when the matched process information Ip is detected, a specific operation corresponding to the detected process information Ip, that is, a first specific operation or a second specific operation is performed (S300, S300'). Here, when performing the first specific operation, a screen is output on a display unit 160 of the ESL 100 (S300). When performing the second specific operation, data is transmitted through a second communication unit 110.

Meanwhile, in the above step S150, when the pattern data Dp recorded in the first register 143-1 is not equal to the pattern data Dp recorded in the second register 143-2, the pattern data Dp recorded in the second register 143-2 is copied to the third register (S160').

According to the present invention configured as above, it is possible to selectively wake up only a specific target, which requires forced wake-up, and furthermore to perform predetermined operations.

## Claims

1. An ESL which transceives a second radio frequency signal with a gateway, comprising:
a first communication unit for receiving a first radio frequency signal having lower power than the second radio frequency signal and outputting a pattern signal generated by patterning the first radio frequency signal;
a second communication unit for receiving the second radio frequency signal;
a control module for controlling the ESL to perform a predetermined specific operation by receiving the pattern signal; and
a display unit for displaying a screen according to the control of the control module.

2. The ESL according to claim 1, wherein the predetermined specific operation is at least one selected from a wake-up operation of converting the ESL from sleep mode to active mode; a first specific operation of displaying at least one of information held by the ESL by the display unit; and a second specific operation of transmitting at least one of the information held by the ESL through the second communication unit.

3. The ESL according to claim 2, wherein the first communication unit comprises:
a first antenna for receiving the first radio frequency signal;
a rectification unit connected to the first antenna and rectifying the first radio frequency signal; and
a detector unit connected to the rectification unit and generating the pattern signal by patterning the signal rectified by the rectification unit to a square wave, wherein the rectification unit is implemented only with passive devices.

4. The ESL according to claim 3, wherein the control module comprises:
a first block maintaining an active state when the ESL is in active mode and in sleep mode; and
a second block activated only when the ESL is in the active mode.

5. The ESL according to claim 4, wherein the first block comprises:
a first register for recording first pattern data matched with the wake-up operation of converting the ESL from the sleep mode to the active mode;
a second register for recording pattern data generated by converting the pattern signal output from the first communication unit; and
a third register for recording a pattern data which is recorded in the second resister and different from the first pattern data.

6. The ESL according to claim 5, wherein the first block further comprises:
a control unit for recording the first pattern data in the first register, comparing the pattern data recorded in the second register with the first pattern data, and transmitting an interrupt signal to the second block when the pattern data recorded in the second register is the first pattern data.

7. The ESL according to claim 6, wherein the second block reads the pattern data recorded in the third register and performs a specific operation of the specific operations, which matches with the read pattern data, when the interrupt signal is applied.

8. The ESL according to claim 7, wherein the ESL further comprises:
a storage unit comprising a pattern data storage for storing the pattern data; and a process information storage for storing process information which is information about the specific operation, wherein the respective pattern data and the respective process information are stored to match with each other.

9. The ESL according to claim 2, wherein the information held by the ESL is at least one selected from MAC address, the number of abnormal operations, and battery voltage information of the ESL, and ambient temperature of the ESL.

10. The ESL according to claim 5, wherein the first pattern data are unique values different in the respective ESLs.

11. A system for an ESL comprising an ESL, a gateway, a server, and a mobile terminal that outputs a first radio frequency signal according to claim 5, wherein a predetermined specific operation comprises an assign operation of registering the ESL in the system for an ESL or an unassign operation of releasing registration of the ESL in the system for an ESL.

12. The system for an ESL according to claim 11, wherein the ESLs are provided in plural number and the respective ESLs have first pattern data as different unique values.

13. A method of operating a system for an ESL comprising an ESL according to claim 8, a gateway, a server, and a mobile terminal that outputs the first radio frequency signal, comprising:
recording the first pattern data in a first register;
receiving the first radio frequency signal and performing a specific operation according to pattern data included in the received first radio frequency signal by the ESL when the mobile terminal outputs the first radio frequency signal; and
converting the ESL to sleep mode.

14. The method of operating a system for an ESL according to claim 13, wherein receiving the first radio frequency signal and performing the specific operation according to the pattern data included in the received first radio frequency signal by the ESL comprises:
recording pattern data in a second register;
determining whether the pattern data recorded in the first register is equal to the pattern data recorded in the second register;
transmitting an interrupt signal from a first block to a second block when the pattern data recorded in the first register is equal to the pattern data recorded in the second register;
reading pattern data recorded in a third register by the second block;
searching process information matched with the pattern data recorded in the third register; and
performing a normal operation when there is no process information matched with the pattern data recorded in the third register.

15. The method of operating a system for an ESL according to claim 14, wherein the pattern data recorded in the second register is copied to the third register when the pattern data recorded in the first register is not equal to the pattern data recorded in the second register.

16. The method of operating a system for an ESL according to claim 14, wherein a specific operation according to the process information matched with the pattern data recorded in the third register is performed when there is the process information matched with the pattern data recorded in the third register.

17. The method of operating a system for an ESL according to claim 13, wherein receiving the first radio frequency signal and performing the specific operation according to the pattern data included in the received first radio frequency signal by the ESL comprises:
recording pattern data in a second register;
determining whether the pattern data recorded in the first register is equal to the pattern data recorded in the second register; and
transmitting an interrupt signal from a first block to a second block when the pattern data recorded in the first register is equal to the pattern data recorded in the second register, wherein the second block wakes up when receiving the interrupt signal.
